# EUROPÄISCHE PATENTANMELDUNG

(11) **EP 1 211 876 A2**
(43) Veröffentlichungstag der Anmeldung: **05.06.2002**
(21) Anmeldenummer: 01128149.0
(22) Anmeldetag: 27.11.2001
(51) Int. Cl.: H04M 3/51

(54) **Verfahren zum Weiterleiten eines Telefonanrufs und eines Datensatzes in einem Callcenter**

(30) Priorität: 29.11.2000 DE 10059188
(71) Anmelder: Tenovis GmbH & Co. KG, 60326 Frankfurt am Main (DE)
(72) Erfinder: Richter, Manfred, 64295 Darmstadt (DE)
(74) Vertreter: Bohnenberger, Johannes, Dr.

(57) **Zusammenfassung**

Die Erfindung betrifft ein Verfahren zum Weiterleiten eines Telefonanrufs und eines eingegebenen Datensatzes von einem ersten Agenten (A) zu einem zweiten Agenten (B) eines Callcenters, wobei der Datensatz in einer Datenbank (D1) zwischengespeichert wird und von dem zweiten Agenten (B) ausgelesen wird.

## Beschreibung

Die Erfindung betrifft ein Verfahren zum Weiterleiten eines bei einem ersten Agenten eines Callcenters eingehenden Telefonanrufs und eines von dem ersten Agenten in ein Datennetz des Callcenters eingegeben Datensatzes an einen zweiten Agenten des Callcenters.

Das Weiterleiten eines Telefonanrufs von einem ersten zu einem zweiten Agenten, die beide als Mitarbeiter an eine Callcenter-Zentrale eines Callcenters kommunikationstechnisch angeschlossen sind, ist insbesondere dann erwünscht, wenn der erste Agent den Telefonanruf zur Weiterbearbeitung an einen zweiten Agenten weitergeben möchte. Um dem zweiten Agenten das erneute Eingeben von Daten, die bereits der erste Agent in ein Datennetz des Callcenters eingegeben hat, zu ersparen, wird mit Weiterleiten des Telefonanrufs auch der in das erste Endgerät, z.B. ein Help-Desk, eingegebene Datensatz von dem ersten Endgerät an das zweite Endgerät des zweiten Agenten übertragen. Dadurch hat der zweite Agent mit Weiterleiten des Telefonanrufs gleichzeitig alle vom ersten Agenten eingegebenen Daten, wie beispielsweise die Adressenangaben des Telefonanrufers, auf dem Bildschirm seines zweiten Endgerätes zur Verfügung. Ein derartiges Weiterleiten des Telefonanrufs zusammen mit einem Datensatz von dem Bildschirm des ersten auf den Bildschirm des zweiten Endgeräts wird auch Screentransfer genannt.

Durch ein festgelegtes Routing in dem Callcenter wird beim Weiterleiten eines Telefonanrufs und eines Datensatzes an einen zweiten Agenten dieser erst nach dem Einleiten des Weiterleitvorganges bestimmt. Somit kann der erste Agent, bei dem der Telefonanruf eingegangen ist, nicht bestimmen, an welchen zweiten Agenten der Screen Transfer weitergeleitet werden soll.

Der Erfindung liegt somit die Aufgabe zugrunde, ein Verfahren zum Weiterleiten eines Telefonanrufs und eines eingegebenen Datensatzes von einem ersten an einen zweiten Arbeitsplatz eines Callcenters zur Verfügung zu stellen, in dem das Weiterleiten des Telefonanrufs und des Datensatzes an den zweiten Arbeitsplatz auf einfache und zuverlässige Weise erfolgt.
Diese Aufgabe wird durch ein Verfahren nach Patentanspruch 1 gelöst.

Die Aufgabe wird durch ein Verfahren gelöst, bei welchem ein bei einem ersten Endgerät eines ersten Agenten eines Callcenters eingehender Telefonanruf und ein von dem ersten Agenten in ein Datennetz des Callcenters eingegebener Datensatz an ein zweites Endgerät eines zweiten Agenten des Callcenters weitergeleitet wird, wobei der Datensatz in einer ersten Datenbank und eine Adressinformation mit einer dem Datensatz zugeordneten Adresse in einer zweiten Datenbank durch das erste Endgerät abgespeichert und von dem zweiten Endgerät ausgelesen wird, nachdem der Telefonanruf weitergeleitet wurde. Somit ist es möglich, den zweiten Agenten durch das Weiterleiten des Telefongesprächs an einen ausgewählten Agenten zuerst zu bestimmen und anschließend den zu dem Telefongespräch zugehörigen Datensatz durch diesen zweiten Agenten mittels der Adressinformation aus der Datenbank auszulesen und sich auf den Bildschirm seines Endgeräts anzeigen zu lassen. Hierbei muß die erste Datenbank, in welcher der Datensatz gespeichert ist, nicht zwingend innerhalb eines Callcenter-Zentrums, mit dem die Agenten verbunden sind, liegen, sondern kann auch außerhalb des Callcenter-Zentrums angeordnet sein. Dadurch ist ein Zugreifen auf den Datensatz durch die Software des zweiten Endgeräts des zweiten Agenten ohne nochmalige Kontaktierung des Callcenter-Zentrums möglich, nachdem das zweite Endgerät bereits die Adressinformation aus der ersten Datenbank des Callcenter-Zentrums erhalten hat. Zudem wird durch das Zurverfügungstellen einer separat angeordneten ersten Datenbank die Gefahr vermieden, daß die in dem Callcenter-Zentrum angeordnete Datenbank durch die Datensätze mit umfangreichen Dateninhalt nicht an die Grenze ihrer Speicherkapazität gelangt.

Im einzelnen enthält das Verfahren die Schritte des Speicherns des Datensatzes in der ersten Datenbank, des Setzens einer Adressinformation mit der Adresse für den gespeicherten Datensatz in der zweiten Datenbank der Callcenter-Zentrale mittels des ersten Endgerätes, des Weiterleitens des Telefonanrufs von dem ersten Endgerät an das zweite Endgerät des zweiten Agenten durch die Callcenter-Zentrale und des Abfragens und Empfangens der Adressinformation und des ihr zugeordneten Datensatzes aus der ersten und der zweiten Datenbank sowie des anschließenden Anzeigens des Datensatzes auf einer Anzeigevorrichtung des zweiten Endgeräts.

Ein wesentlicher Punkt der Erfindung liegt darin, daß die Adressinformation mit der Adresse für den Datensatz in der zweiten Datenbank des Callcenters zwischengespeichert wird, bevor das zweite Endgerät des zweiten Agenten mittels seiner Software diesen Datensatz ausliest. Durch diesen Schritt der Zwischenspeicherung des Datensatzes wird ermöglicht, daß zuerst ein Telefonanruf auf Wunsch des ersten Agenten über das Callcenter an einen zweiten Agenten weitergeleitet wird, und erst danach der Datensatz anhand der ihm zugeordneten Adresse aus der Datenbank ausgelesen wird.

Sobald vom ersten Agenten mittels des ersten Endgerätes die Adressinformation mit der Adresse in der zweiten Datenbank gesetzt ist, wird gemäß einer bevorzugten Ausführungsform eine Information über den Wunsch des Weiterleitens des Telefonanrufs an den zweiten Agenten von dem ersten Endgerät des ersten Agenten an die Callcenter-Zentrale gesendet. Dadurch wird der Callcenter-Zentrale mitgeteilt, daß ein Weiterleiten des Telefonanrufs an den zweiten Agenten erwünscht ist.

Der Telefonanruf wird dann von der Callcenter-Zentrale an den zweiten Agenten weitervermittelt. Diesem wird auf seinem zweiten Endgerät eine Mitteilung (ein Event) über einen neu eingegangenen Telefonanruf angezeigt wird. Somit kann ein Weiterleiten des Datensatzes nur stattfinden, wenn der zweite Agent den Datensatz aus der ersten Datenbank mittels der Adressinformation ausliest, nachdem das Telefongespräch bereits weitergeleitet worden ist.

In einer bevorzugten Ausführungsform empfängt das zweite Endgerät in Antwort auf die gesendete Abfragenachricht eine Bestätigungsnachricht darüber, ob die Adressinformation mit der Adresse in der zweiten Datenbank gesetzt ist. Mit dieser Bestätigungsnachricht wird dem zweiten Agenten mitgeteilt, daß aufgrund der Existenz der Adressinformation nicht ein Direktanruf, sondern ein weitergeleiteter Telefonanruf vorliegt. Mittels dieser Information kann sich der zweite Agent dann entscheiden, ob er den weitergeleiteten Anruf fortführen oder nicht fortführen möchte.

Gemäß einer Weiterbildung der Erfindung kann das zweite Endgerät des zweiten Agenten auch als ein Einwahlthema ausgebildet sein.

Nach Beendigung des weitergeleiteten Telefonanrufs durch den zweiten Agenten wird die Adressinformation in der zweiten Datenbank der Callcenter-Zentrale wieder gelöscht, um so ein erneutes Setzen der Adressinformation durch einen anderen oder denselben Agenten zu ermöglichen. Somit steht der zweite Agent für ein erneutes Weiterleiten eines Telefonanrufs wieder zur Verfügung. Die Adresse des Datensatzes, der auch Record genannt wird, kann eine Recordnummer darstellen, die der eingegebenen Adressinformation in der zweiten Datenbank zugeordnet ist. Es ist jedoch auch jede andere Art von Zeichenfolge denkbar.

Weitere Aspekte der Erfindung ergeben sich aus den Unteransprüchen sowie der nachfolgenden Beschreibung.

Nachfolgend wird die Erfindung anhand von einem Ausführungsbeispiel beschrieben, das anhand der Abbildungen näher erläutert wird. Hierbei zeigen:
- Fig. 1:: ein Blockschaltbild einer Vorrichtung zur Durchführung des erfindungsgemäßen Verfahrens und
- Fig. 2:: eine schematische Darstellung des Ablaufs des erfindungsgemäßen Verfahrens.

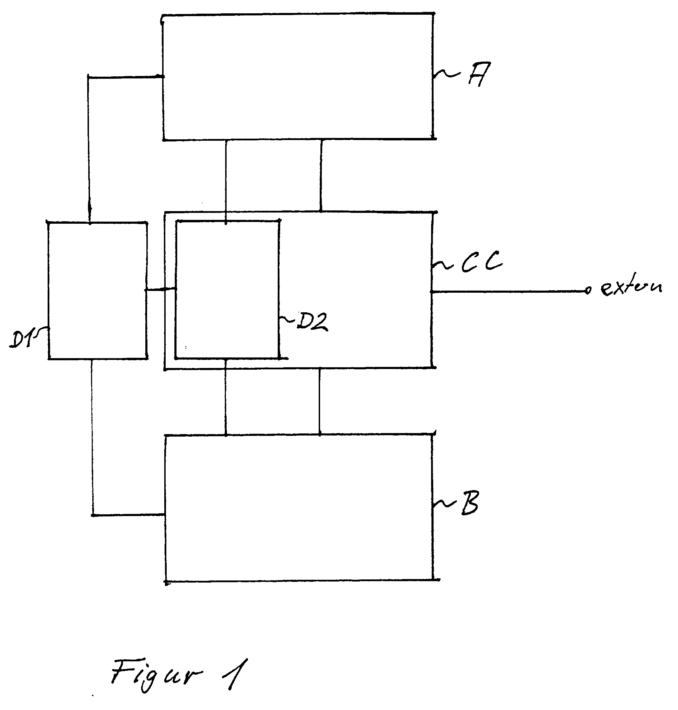

Die in Fig. 1 gezeigte Vorrichtung zur Durchführung des erfindungsgemäßen Verfahrens umfaßt eine Callcenter-Zentrale CC, ein Endgerät A eines ersten Agenten, ein Endgerät B eines zweiten Agenten und einen Datenspeicher D1. Bevor ein Telefongespräch von dem Agenten A über die Callcenter-Zentrale CC an den Agenten B weitergeleitet wird, wird der zu dem Telefongespräch dazugehörige Datensatz mittels der Software des ersten Endgeräts des Agenten A in der Datenbank D1 gespeichert. Nahezu zeitgleich wird eine zu dem Datensatz zugehörige Adressinformation von der Software des Endgerätes A des ersten Agenten in einer Datenbank D2 innerhalb der Callcenter-Zentrale gesetzt und gespeichert. Sowohl auf den in der Datenbank D1 abgespeicherten Datensatz als auch auf die in der Datenbank D2 gesetzte Adressinformation kann die Software des Endgeräts B des zweiten Agenten zurückgreifen, sobald das Telefongespräch über die Callcenter-Zentrale CC von dem Endgerät A an des Endgeräts B weitergeleitet worden ist.

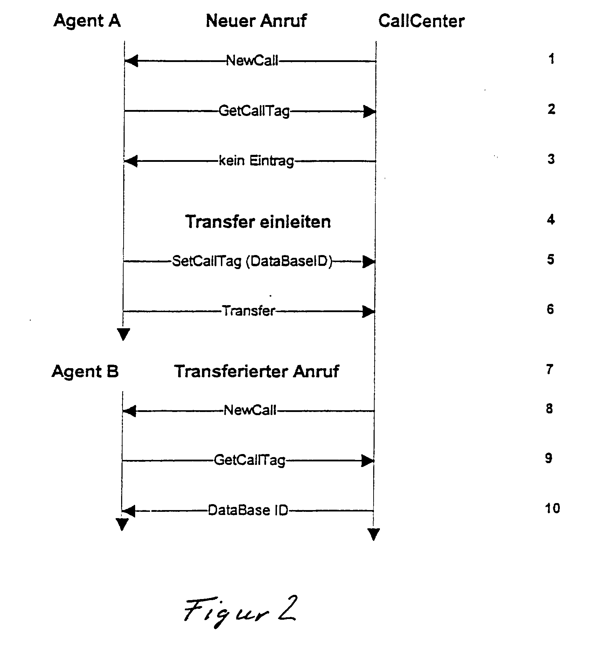

Figur 2 zeigt die Schritte des Verfahrensablaufs zum Weiterleiten eines Telefonanrufs zusammen mit einem eingegebenen Datensatz von dem ersten Agenten über die Callcenter-Zentrale an den zweiten Agenten. Hierbei müssen die beiden Agenten nicht zwingend an dem Ort der Callcenter-Zentrale positioniert sein. Vielmehr ist es auch denkbar, daß die beiden Agenten über Tele-Working ortsunabhängig von der Callcenter-Zentrale mit dieser mittels eines PCs und eines Telefonapparates verbunden sind.

In einem Schritt 1 geht über das Callcenter ein neuer Anruf ("NewCall") beim Agenten A ein. Die Software des ersten Endgeräts des Agenten A prüft daraufhin in Schritt 2, ob der eingegangene Anruf ein weitergeleiteter bzw. transferierter Anruf ist. Dazu sendet das erste Endgerät eine Adressinformation, ("GetCallTag") mit einem reservierten Adressinformationsnamen, wie beispielsweise "DataBaseID", an die Callcenter-Zentrale zurück. Da es sich jedoch um keinen weitergeleiteten Telefonanruf handelt, existiert auch keine gesetzte Adressinformation in der zweiten Datenbank D2. Deshalb wird in Antwort auf den oben genannten Überprüfungsschritt 2 in einem Schritt 3 dem Endgerät A von der Callcenter-Zentrale CC eine Information mit dem Inhalt "kein Eintrag" gesendet.

In dem Schritt 4 wird nun ein Screentransfer, also das Weiterleiten eines eingegangenen Telefonanrufs und des eingegebenen Datensatzes, an das Endgerät B begonnen. Hierfür setzt die Software des ersten Endgeräts eine Adressinformation ("Call-Tag") mit einer dem Datensatz zugeordneten Adresse in der zweiten Datenbank der Callcenter-Zentrale CC mit dem Befehl Set-CallTag (Schritt 5). Die Adresse ist ein eindeutiger Wert für einen bestimmten Datensatz (Record), den der erste Agent in das Datennetz des Callcenters bereits eingegeben hat. Anschließend wird der Weiterleitungswunsch ("Transfer") des Telefonanrufs der Callcenter-Zentrale CC mitgeteilt (Schritt 6) und in einem Schritt 7 anhand der übergebenen Telefonnummer der Telefonanruf im Callcenter an einen neuen, freien Agenten übermittelt.

Daraufhin erhält das Endgerät B des zweiten Agenten in einem Schritt 8 eine Mitteilung darüber, daß ein neuer Anruf ("New-Call") beim zweiten Endgerät eingegangen ist, wobei diese Mitteilung mittels Software auf einer Anzeigevorrichtung des Endgeräts angezeigt wird. In Antwort auf diese Mitteilung überprüft nun die Software des Endgeräts B mittels des Befehls GetCallTag im Schritt 9, ob eine vereinbarte Adressinformation ("CallTag") in der Datenbank abgespeichert ist. Da es sich hierbei um einen weitergeleiteten Telefonanruf handelt, existiert auch das vorher durch den ersten Agenten gesetzte Call-Tag mit der Adresse. Dies wird durch Senden einer Bestätigungsnachricht von der Callcenter-Zentrale an das Endgerät des Agenten B in dem Schritt 10 bestätigt. Gleichzeitig wird die Adresse (Recordnummer) des Datensatzes (Record) von der Callcenter-Zentrale CC an das Endgerät B übertragen. Daraufhin sucht die Software des Endgeräts B in der ersten Datenbank D1 nach dem zugeordneten Datensatz und empfängt diesen Datensatz, um ihn auf der Anzeigevorrichtung des Endgeräts anzuzeigen.

Nun steht der zweite Agent mit dem Anrufer in Verbindung und kann gleichzeitig die bereits eingegebenen Daten auf der Anzeigevorrichtung, nämlich einem Bildschirm, seines Endgeräts lesen. Das Callcenter-Zentrum hat hierbei durch die übergebene Telefonnummer den Telefonanruf an einen bestimmten zweiten Agenten weitergeleitet, der anschließend den zugehörigen Datensatz mittels Software seines Endgerätes selbst ausliest. Ein erster Agent, der beispielsweise eine erste Datenaufnahme in Form von Adressenangaben des Anrufers vornimmt und selbst für Haftpflicht-Versicherungsfälle zuständig ist, kann den Anruf, bei dem es sich um die Aufnahme eines Auto-Versicherungsfalles handelt, gezielt an bestimmte Sachbearbeiter, nämlich den zweiten Agenten, weiterleiten.

An dieser Stelle sei darauf hingewiesen, daß alle oben beschriebenen Schritte für sich allein gesehen und in jeder Kombination, insbesondere die in der Zeichnung dargestellten Details als erfindungswesentlich beansprucht werden. Abänderungen hiervon sind dem Fachmann geläufig.

### Bezugszeichenliste

- 1: Eingang eines neuen Telefonanrufs
- 2: Senden des Prüfbefehls GetCallTag
- 3: Empfangen eines "Leer-Strings"
- 4: Screentransfer einleiten
- 5: Setzen eines CallTags mit einem Adressinformationsnamen und einer Adresse
- 6: Senden des Weiterleitungswunsches
- 7: Weiterleiten des Telefonanrufs
- 8: Empfangen einer Mitteilung über ein neues Telefongespräch
- 9: Senden des Überprüfungsbefehls GetCallTag
- 10: Empfangen der Adresse
- A, B: Endgerät eines Agenten
- CC: Callcenter-Zentrale
- D1: erste Datenbank
- D2: zweite Datenbank

## Patentansprüche

1. Verfahren zum Weiterleiten eines bei einem ersten Endgerät (A) eines ersten Agenten eines Callcenters eingehenden Telefonanrufs und eines an dem ersten Endgerät (A) in ein Datennetz des Callcenters eingegebenen Datensatzes an ein zweites Endgerät (B) eines zweiten Agenten des Callcenters,
**dadurch gekennzeichnet, daß**
der Datensatz in einer ersten Datenbank (D1) und eine Adressinformation mit einer dem Datensatz zugeordneten Adresse in einer zweiten Datenbank (D2) durch das erste Endgerät abgespeichert und durch das zweite Endgerät ausgelesen wird, wobei das Auslesen erfolgt, nachdem der Telefonanruf weitergeleitet worden ist.

2. Verfahren nach Anspruch 1,
**gekennzeichnet durch**
folgende Schritte:
- Speichern des Datensatzes in der ersten Datenbank (D1),
- Setzen (5) der Adressinformation mit der Adresse für den gespeicherten Datensatz in der zweiten Datenbank (D2) einer Callcenter-Zentrale (CC) mittels dem ersten Endgerät,
- Weiterleiten (7) des Telefonanrufs von dem ersten Endgerät an das zweite Endgerät des zweiten Agenten (B) **durch** die Callcenter-Zentrale (CC),
- Empfangen (8) einer Information über einen eingehenden Telefonanruf **durch** das zweite Endgerät,
- Abfragen (9) und Empfangen der Adressinformation und des der Adresse der Adressinformation zugeordneten Datensatzes aus der ersten und zweiten Datenbank, und
- Anzeigen des Datensatzes auf einer Anzeigevorrichtung des zweiten Endgeräts.

3. Verfahren nach Anspruch 1 oder 2, insbesondere nach Anspruch 2,
**gekennzeichnet durch**
den Schritt (10) des Empfangens einer Nachricht von der Callcenter-Zentrale (CC) **durch** das zweite Endgerät (B) mit dem Inhalt, daß das Vorhandensein der gesetzten Adressinformation mit einem Adressinformationsnamen in der zweiten Datenbank (D2) bestätigt wird.

4. Verfahren nach einem der vorangegangenen Ansprüche,
**dadurch gekennzeichnet, daß**
nach Beendigung des weitergeleiteten Telefonanrufs und nach dem Empfangen des Datensatzes durch das zweite Endgerät (B) die Adressinformation in der zweiten Datenbank (D2) des Callcenters gelöscht wird.

5. Verfahren nach einem der vorangegangenen Ansprüche,
**dadurch gekennzeichnet, daß**
folgende Schritte zur Überprüfung, ob beim ersten Endgerät (A) ein weitergeleiteter Telefonanruf eingegangen ist, vorab durchgeführt werden:
- Senden (2) einer Abfrageinformation von dem ersten Endgerät (A) an die Callcenter-Zentrale (CC) in Antwort auf den beim ersten Endgerät eingehenden Telefonanruf zum Abfragen, ob eine Adressinformation mit einem Adressinformationsnamen in der zweiten Datenbank (D2) gesetzt ist, und
- Empfangen (3) einer Nachricht von der Callcenter-Zentrale (CC) durch das zweite Endgerät (B) mit dem Inhalt, daß keine Adressinformation in der zweiten Datenbank des Callcenter-Zentrums gespeichert ist.
